# EUROPÄISCHE PATENTSCHRIFT

(11) **EP 2 432 043 B1**
(45) Veröffentlichungstag und Bekanntmachung des Hinweises auf die Patenterteilung: **22.04.2015**
(21) Anmeldenummer: 10010035.3
(22) Anmeldetag: 21.09.2010
(51) Int. Cl.: H01M 2/10, H01M 2/12, H01M 10/04, H01M 10/613, H01M 10/615, H01M 10/647, H01M 10/6555, H01M 10/6556, H01M 10/656, H01M 2/02, H01M 10/6571

(54) **Dichtungsrahmen zur Verwendung in einer Batterie sowie Batterie**
Sealing frame for use in a battery and battery
Cadre d'étanchéité destiné à l'utilisation dans une batterie et batterie

(43) Veröffentlichungstag der Anmeldung: 21.03.2012
(73) Patentinhaber: Carl Freudenberg KG, 69469 Weinheim (DE)
(72) Erfinder: Kritzer, Peter, Dr., 67147 Forst (DE); Nahrwold, Olaf, 67071 Ludwigshafen (DE); Klingshirn, Christoph, 69214 Eppelheim (DE)

(56) Entgegenhaltungen:
- EP-A1- 2 273 162
- JP-A- 2009 021 067
- US-A- 5 521 024
- US-A1- 2008 070 106

## Beschreibung

### Technisches Gebiet

Die Erfindung betrifft im Allgemeinen Dichtungsrahmen zur Verwendung in einer Batterie, insbesondere Dichtungsrahmen zum Halten und Kapseln von so genannten Coffee-Bag-Zellen. Die Erfindung betrifft weiterhin Batterien aus zwischen Dichtungsrahmen gehaltenen Zellen.

### Stand der Technik

Größere Batterien sind aus einzelnen Zellen aufgebaut. Üblicherweise enthält eine Batterie für Hybrid- bzw. Elektro-Fahrzeuge oder industrielle Anwendungen zwischen etwa zwanzig und mehreren hundert einzelne Zellen. Dabei können die einzelnen Zellen als Rundzellen, als prismatische Zellen oder sogenannte Coffee-Bag-Zellen ausgestaltet sein. Coffee-Bag-Zellen umfassen eine flexible, aus Folie aufgebaute Hülle, in der elektrischen Komponenten einer Zelle angeordnet sind.

Zur Realisierung einer optimalen Raumausnutzung in einer Batterie werden vor allem Coffee-Bag-Zellen verwendet. Diese zeichnen sich zudem durch ein geringes Gewicht bei hoher Kapazität aus. Coffee-Bag-Zellen sind über die thermisch leitfähigen Folien der Hülle gut kühlbar. Des Weiteren sind Zellen dieser Bauart leicht skalierbar, da alle Komponenten der Zelle inklusive des Foliengehäuses in der Produktion in einfacher Weise In der Größe variiert werden können. Zudem ist die Herstellung dieser Zelltypen kostengünstig, weil u.a. auf ein teures, festes Gehäuse verzichtet werden kann. Dementsprechend sind solche Zellen besonders für Applikationen mit hohem Preisdruck interessant.

Aufgrund hoher gespeicherter Energiemengen stellen größere Batterien stets ein Sicherheitsrisiko beim Auftreten von Fehlfunktionen dar. Dabei sind Lithium-Batterien als besonders kritisch anzusehen, da diese eine hohe Energiedichte, einen brennbaren Elektrolyten und dünne Separatoren aufweisen, Schließlich erzeugen Lithium-Batterien hohe Zell-Spannungen, so dass die in der Zelle angeordneten Komponenten hohen etektrochemischen Belastungen ausgesetzt sind. Dies ist besonders relevant bei Auto- und Industriebatterien, für die Lebensdauern von mindestens 8-10 Jahren angesetzt sind, welche zu erheblicher Alterung der Zellen-Komporienten führen kann.

Die zuvor genannten Coffee-Bag-Zellen lassen sich platzsparend montieren. So können große Energiemengen pro Volumeneinheit in einer Batterie gespeichert werden. Hiermit sind allerdings wesentliche konstruktionsbedingte Nachteile verbunden. Durch die flexible Hülle verändert sich die Dimension von Coffee-Bag-Zellen, wenn diese geladen oder entladen werden. Dies ist auch mit einer Volumenausdehnung verbunden. Die Volumenausdehnung führt zu typischen Dickenänderungen einer einzelnen Zelle von etwa 5 % zwischen geladenem und unbeladenem Zustand.

Bei einem Zusammenbau eines sogenannten "Stacks", der aus vielen einzelnen, in Reihe geschalteten Zellen besteht, muss daher berücksichtigt werden, dass die einzelnen Zellen ein veräinderliche Dicke zeigen.

Insbesondere muss darauf geachtet werden, dass die Zellen im geladenen Zustand, bei welchem sie ihre größte Dicke annehmen, nahezu keine oder nur minimale Pressung auf die Flächen benachbarter Zellen ausüben. Dabei ist grundsätzlich auch zu berücksichtigen, dass die Dicke der flexiblen Zellen auch aufgrund der Fertigungstoleranzen nicht einheitlich ist, sondern Schwankungen unterworfen ist.

Des Weiteren besteht ein Bedarf nach einer Anordnung, durch welche Stöße oder Vibrationen abgefedert und/oder gedämpft werden, so dass das Innere der Batterie sowie deren mechanische und elektrische Anbindungen (z.B. elektrische Kontakte oder Kühlrohre) keinen Schaden nehmen. So sollten Anschlüsse der Leitungs- und Oberwachungselektronik möglichst frei von mechanischen Belastungen mit der Batterie verbunden werden. Ein Loslösen schon eines der vielen hundert Kontakten der Leistungselektronik führt bei einer Reihenschaltung zum Ausfall der Batterie. Bei Ausfall eines Kontaktes der Überwachungselektronik kann die dann nicht mehr überwachte Zelle allmählich in einen kritischen Zustand gelangen, was mittelfristig zu einer Schädigung oder Ausfall der gesamten Batterie führen kann.

Zudem kann bei Bruch einer Kühlleitung Kühlmedium Ins Batterie-Innere gelangen. Je nach Art des Kühlsystems (z.B. einer Klimaanlage) kann es sich bei dem Kühlmedium um brennbare, gasförmige Sunbstanzen handeln, die sich beim Kontakt mit den stromführenden Teilen entzünden können.

Die Kanten der zuvor genannten Coffee-Bag-Zellen weisen eine umlaufende Siegelnaht auf. Diese Siegelnaht verbindet zwei Folien einer Zelle, die die Hülle bilden. In dem dadurch gebildeten Hohlraum sind dann die aktiven Bauteile der Zelle eingeschlossen. Diese Folien sind dazu auf der Innenseite mit einem elektrisch isolierenden, hartvermitteinden Siegel-Thermoplast beschichtet.

Dieses Siegel-Thermoplast kann aus einem funktionalisierten Polyolefin gebildet sein.

Die Siegelnaht stellt eine mechanische Schwachstelle einer Coffee-Bag-Zelle dar. Der Luftdruck kann in der Umgebung der Zellen schwanken. Wenn das Gehäuse einer Batterie hermetisch dicht abgeschlossen ist, kann es zu temperaturbedingten Druckschwankungen von typischerweise 0,2 bar kommen. Diese Druckschwankungen belasten die Siegelnähte zusätzlich. Die Siegelnaht stellt aber auch eine Sollbruchstelle dar, die bei einem Störfall der Batterie dem Elektrolyt erlauben soll, auszublasen. Hierdlurch soll ein Aufplatzen der Zelle an der Hülle vermieden werden.

Darüber hinaus sind die Zellen oft erheblichen Temperatur-Schwankungen ausgesetzt. Bei Autobatterien wereden dabei typischer Weise Extreme von -30 °C bis +70 °C angenommen.

Wenn der im Störfall austretende brennbare Elektrolyt oder organische Zersetzungsgase In Kontakt mit Elektroden tritt, kann er sich entzünden und zu Bränden oder Explosionen führen. Die maximalen zulässigen Überdrücke im Inneren einer Coffee-Bag-Zelle liegen meist weit unterhalb von 1 bar, um ein Öffnen der Siegelnaht zu verhindern. Besonders kritisch ist bei Coffee-Bag-Zellen die Durchführung der stromableitenden Elektroden anzusehen. Diese weisen meist eine Dicke von etwa 0,1 bis 0,3 mm auf. In diesem Bereich ist auch eine mögliche Leckage besonders kritisch, da sich austretender Elektrolyt an den Elektroden augenblicklich entzünden kann. Die Siegelnaht wird generell als Schwachstelle großer Zellen angesehen, da sie über Jahre hinweg ständigen, durch das Zyklisieren bedingte, Belastungen ausgesetzt ist.

Selbst wenn Maßnahmen vorgesehen werden, durch die der Elektrolyt oder die organischen Zersetzungsgase bei einem Störfall an einer bestimmten Stelle der Siegelnaht ausgeblasen wird, um zu vermeiden, dass der austretende Elektrolyt im Kontakt mit Elektroden gelangt, besteht weiterhin die Schwierigkeit darin, den ausgeblasenen Elektrolyten von der Batterie wegzuleiten. Insbesondere beim Einsatz in Kraftfahrzeugen muss zuverlässig gewährleistet werden, dass der austretende Elektrolyt nicht in den Fahrzeuginnenraum gelangt. Herkömmliche Maßnahmen zum Auffangen des im Störfall ausgeblasenen Elektrolyten sind aufwändig und erfordern zusätzliche Montagearbeiten, um das Batteriegehäuse mit einem separaten Ausblaskanal für den Elektrolyten zu versehen.

Aus der Druckschrift JP 2009/21067 ist eine Batteriezelle in Form einer Coffee-Bag-Zelle bekannt, die mithilfe eines Halterahmens zu einem Batterie-Stack verbunden werden kann. Es ist eine Ableitungsöffnung an einer die Batteriezelle enthaltenden Öffnung in dem Halterahmen vorgesehen, in die ein Abschnitt der Dichtungsnaht der Batteriezelle eingelegt ist, um austretende Elektrolyte abzuleiten.

Die Druckschrift US 2008/0070106 A1 offenbart einen Dichtungsrahmen, mit dessen Hilfe eine Batterie mit mehreren Batteriezellen aufgebaut werden kann. Die Dichtungsrahmen definieren Innenräume, in dem die Batteriezellen angeordnet sind, wobei eine Öffnung vorgesehen ist, um die Innenräume, die durch die Dichtungsrahmen gebildet sind, miteinander zu verbinden. Es ist eine umlaufende Dichtung vorgesehen, um die durch die Dichtungsrahmen ausgebildeten Innenräume nach außen hin abzudichten. Die Dichtung umschließt sowohl die Öffnung in dem Dichtungsrahmen als auch die Ableitungsöffnung.

In der Druckschrift US 5,521,024 A ist der Aufbau einer Bleibatterie mit zwei Kollektorplatten und einem dazwischen angeordneten Dichtungsrahmen beschrieben.

In der Druckschrift EP 2 273 162 A1 ist ein Dichtungsrahmen für eine Batterie offenbart, der beidseitig elastisch komprimierbare Dichtflächen aufweist. Im Störfall soll Elektrolyt entweichen können und im Normalbetrieb eine zuverlässige Dichtheit aufweisen.

### Darstellung der Erfindung

Es ist Aufgabe der vorliegenden Erfindung, vorzusehen, dass bei einer aus separaten Einzel-Zellen aufgebauten Batterie die Ableitung von bei einem Störfall austretenden Elektrolyten mit einem möglichst geringen Montageaufwand erreicht werden kann.

Diese Aufgabe wird durch den Dichtungsrahmen gemäß Anspruch 1 sowie durch die Batterie gemäß dem nebengeordneten Anspruch gelöst.

Weitere vorteilhafte Ausgestaltungen sind in den abhängigen Ansprüchen angegeben.

Gemäß einem ersten Aspekt ist ein Dichtungsrahmen zur Verwendung in einer Batterie vorgesehen. Der Dichtungsrahmen umfasst
- einen Grundkörper, der eine Öffnung umgreift,
- mindestens eine umlaufende elastisch komprimierbare Dichtung, die die Öffnung umgreift,
wobei ein Auslösebereich an einem Rand der Öffnung vorgesehen ist, um keinen oder einen verminderten Anpressdruck auf ein an den Dichtungsrahmen angelegtes Element auszuüben, wobei angrenzend an den Auslösebereich eine durchgängige Ableitungsöffnung in dem Grundkörper ausgebildet ist.

Eine Idee des obigen Dichtungsrahmens zum Aufbau einer Batterie mit zum Beispiel sogenannten Coffee-Bag-Zellen besteht darin, dass dieser eine umlaufende Dichtung aufweist, um eine Zelle zu halten, wobei ein Auslösebereich vorgesehen ist, in dem die Dichtfläche keinen oder einen verringernden Anpressdruck an der Siegelnaht der Zelle ausübt, um eine Sollausblasstelle auszubilden. An den Auslösebereich für die Sollausblasstelle schließt sich eine Ableitungsöffnung an, die bei aufeinander Anordnen von mehreren Dichtungsrahmen zum Aufbau einer Batterie einen Ableitungskanal für über die Auslösebereich austretendes Elektrolyt darstellt.

Das Vorsehen des Ableitungskanals ermöglicht es in besonders einfacher Weise, gleichzeitig mit dem Aufbau eines Stapels von Batteriezellen den Ableitungskanal für bei einem Störfall austretendes Elektrolyt zu schaffen. Es ist somit nicht notwendig, ein zusätzliches Element an der Batterie, wie z.B. eine Abblashaube oder dergleichen, vorzusehen, das die Sollausblasstellen überdeckt, sondern es ist lediglich eine einzige Öffnung als Anschluss für den Ableitungskanal vorgesehen. Dadurch kann weiterhin in zuverlässiger Weise ein Ableitungskanal für den Elektrolyten ausgebildet werden, da kein zusätzliches Bauteil an dem Gehäuse der Batterie angeordnet werden muss.

Weiterhin kann die Dichtung die Ableitungsöffnung umschließen. Dadurch ist es möglich, eine in sich geschlossene Dichtung zu verwenden, die sowohl die Öffnung als auf die Ableitungsöffnung umgibt. Da in sich geschlossene Dichtung kein Endstück aufweist, ist die Gefahr eines Lecks durch Wegbiegen eines Endes der Dichtung oder eines nicht durch die Dichtung abgedichteten Bereichs reduziert.

Gemäß einer Ausführungsform kann die Dichtung als Dichtungsstreifen oder Dichtungsbereich vorgesehen sein, der zumindest außerhalb des Auslösebereichs bündig mit einer Kante der Öffnung abschließt.

In dem Dichtungsrahmen können Bohrungen vorgesehen sein, um einen Kühlmittel- oder Heizmittelkanal auszubilden. Dabei können die Bohrungen selbst mit Dichtungen versehen sein und so den Kanal darstellen. Alternativ können durch die Bohrungen Rohre für Kühl- / Heizmedien bzw. Kabel für eine elektrische Heizung verlegt werden.

Der Grundkörper kann aus einem elastisch komprimierbaren Material gefertigt sein, wobei insbesondere die Dichtung einstückig mit dem Grundkörper ausgebildet ist.

Weiterhin kann die Dichtung als elastisch komprimierbare Schicht ausgebildet sein, die auf dem nichtelastischen Grundkörper aufgebracht ist.

Es kann vorgesehen sein, dass der Auslösebereich des Grundkörpers durch eine Vertiefung einer Kante der Öffnung in dem Grundkörper ausgebildet ist.

Die Kante des Grundkörpers kann in dem Auslösebereich durch einen Steg ausgebildet sein, der so angeordnet ist, um eine beidseitige Vertiefung einer Kante der Öffnung in dem Grundkörper auszubilden.

Gemäß einer weiteren Ausführungsform kann die Kante des Grundkörpers in dem Auslösebereich durch einen Steg ausgebildet sein, der so angeordnet ist, um eine beidseitige Vertiefung einer Kante der Öffnung in dem Grundkörper auszubilden. Der Steg hat die Aufgabe den Grundkörper des Dichtungsrahmens im Bereich der Ableitungsöffnung zu versteifen, so dass eine größere Formstabilität erreicht wird.

Der Steg kann zwischen der Ableitungsöffnung und der Öffnung angeordnet sein.

Gemäß einem weiteren Aspekt ist eine Anordnung mit dem obigen Dichtungsrahmen und einer Zelle, insbesondere einer Coffee-Bag-Zelle, vorgesehen, wobei die Zelle ein Zellgehäuse aufweist, das von einer Siegelnaht umgeben ist, wobei die Zelle so an den Dichtungsrahmen anlegbar ist, dass das Zellgehäuse in die Öffnung hineinreicht, dass die Siegelnaht an der Dichtung anliegt und dass in dem Auslösebereich die Siegelnaht im wesentlichen nicht von der Dichtung beaufschlagt ist.

Gemäß einem weiteren Aspekt ist eine Batterie vorgesehen. Die Batterie umfasst mindestens zwei der obigen Dichtungsrahmen und mindestens eine Zelle, die zwischen zwei Dichtungsrahmen positioniert ist, wobei die Zelle ein Zellgehäuse aufweist, das von einer Siegelhaht umgeben ist, wobei das Zellgehäuse sich in die Öffnungen der Grundkörper der Dichtungsrahmen erstreckt und wobei die Siegelnaht zwischen einer Dichtung eines der Dichtungsrahmen und einem Grundkörper eines weiteren der Dichtungsrahmen oder zwischen zwei sich gegenüberliegenden Dichtungen der Dichtungsrahmen mit einem Anpressduck aufgenommen ist, wobei in dem Auslösebereich die Siegelnaht nicht durch die Dichtung beaufschlagt ist.

Weiterhin können zwischen den: Dichtungsrahmen Ableitbleche der Zelle aufgenommen sein, welche über die Dichtungsrahmen hinausragen.

Weiterhin kann die Batterie durch wechselweises Stapeln von Dichtungsrahmen und Zellen aufgebaut sein, wobei an mindestens einem Ende der Batterie in Stapelrichtung ein Deckelteil angeordnet ist, um den durch die Öffnungen der Dichtungsrahmen gebildeten Innenraum zu verschließen, wobei das Deckelteil ein Anschlusselement zum Ahschließen einer Abführungsleitung zum Ableiten von aus einer der Zellenaustretendem Elektrolyten aufweist, das mit einem durch die Ableitungsöffnungen gebildeten Ableitungslcanal in Verbindung steht.

Gemäß einem weiteren Aspekt ist die Verwendung der obigen Dichtungsrahmen zum Aufbau einer Batterie mit einer oder mehreren Zellen vorgesehen.

### Kurzbeschreibung der Zeichnung

Bevorzugte Ausführungsformen werden nachfolgend anhand der beigefügten Zeichnungen näher erläutert. Es zeigen:
- Figur 1:: eine schematische Darstellung einer Coffee-Bag-Zelle in einer Draufsicht und In einer Seitenansicht;
- Figur 2:: eine Draufsicht auf einen Dichtungsrahmen mit einer umlaufenden elastischen Dichtung;
- Figur 3:: eine perspektivische Ansicht des Dichtungsrahmens der Figur 2;

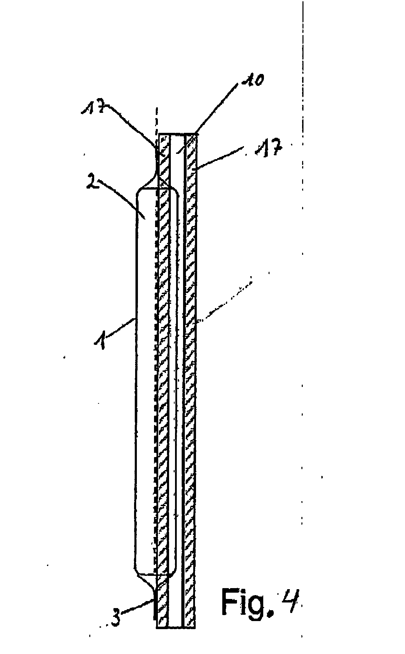

- Figur 4:: ein Dichtungsrahmen mit beidseitig angeordneten Dichtungen und angelegter Coffee-Bag-Zelle; und
- Figur 5:: eine perspektivische Darstellung einer aus mehreren Coffee-Bag-Zellen und Dichtungsrahmen zusammengesetzten Batterie mit Ableitungskanal für im Störfall austretender Elektrolyt.

### Beschreibung von Ausführungsformen

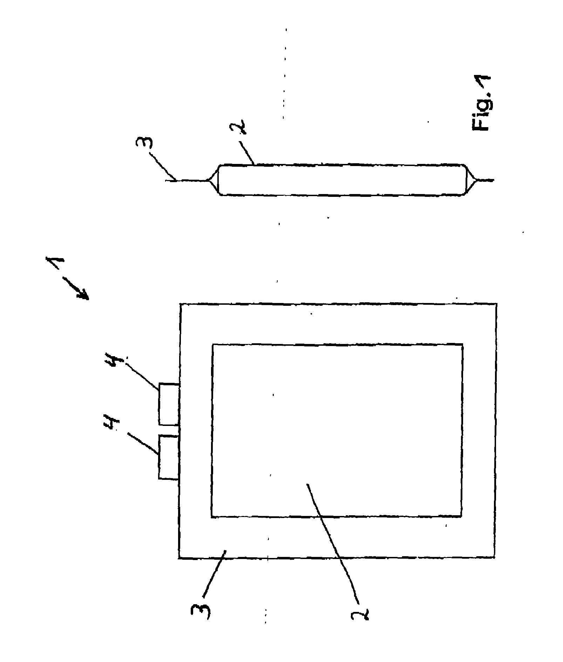

Figur 1 zeigt eine galvanische Zelle 1 in einer Draufsicht und in einer Seitenansicht. Die galvanische Zelle 1 ist als Coffiee-Bag-Zelle ausgebildet Das Innere der Zelle 1 befindet sich im Zellgehäuse 2. Das Zellgehäuse 2 ist aus zwei Lagen von beschichteten Metallblechen, insbesondere von mit einer Polyolefin-Beschichtung versehenen Aluminiumfolien ausgebildet. Im Inneren der Zelle 1 befindet sich ein Elektroden/Separatorstapel, der die elektrische Spannung bereitstellt.

Das Zellgehäuse 2 weist an seinem Rand eine umlaufende Siegelnaht 3 auf, an der die beiden beschichteten Metallbleche durch Laminieren miteinander verbunden sind und dadurch das Innere der Zelle 1 hermetisch abschließen. Aus der Siegelnaht 3 ragen Ableitbleche 4 heraus, über die die elektrische Spannung abgegriffen werden kann. Herkömmliche Zellen für Kraftfahrzeug-Batterien oder industrielle Backup-Batterien weisen üblicherweise ein Zellgehäuse mit einer Dicke von 1 cm einer Breite und Länge von mehr als 20 cm auf. Die Breite der umlaufenden Siegelnaht solcher Zellen beträgt etwa 1 cm und die Dicke etwa 1 - 2 mm.

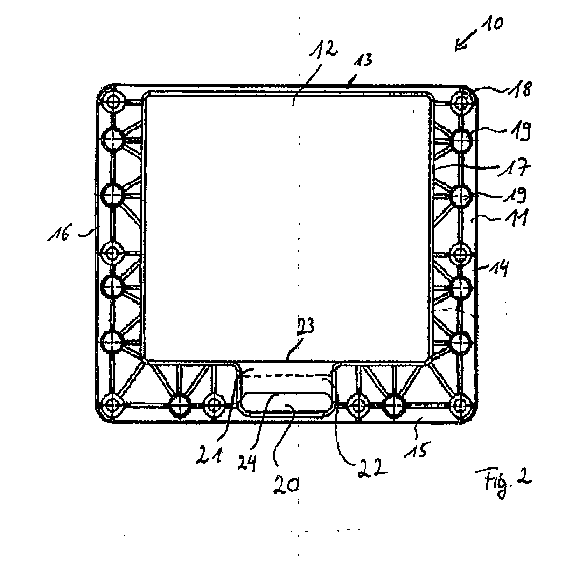

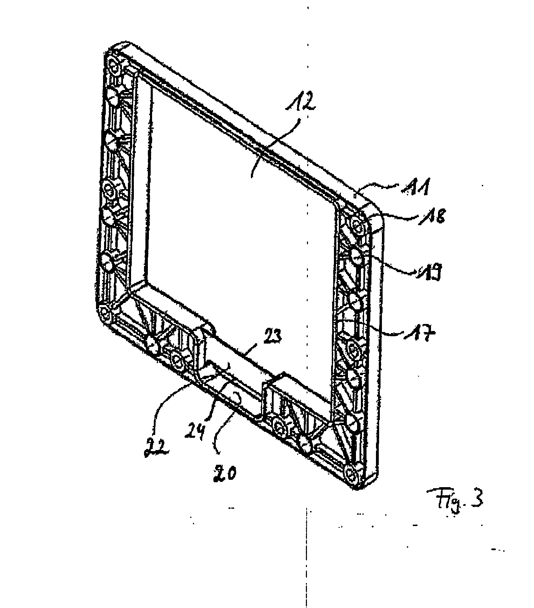

Fig. 2 zeigt eine Draufsicht auf einen Dichtungsrahmen 10 zum Aufbau einer Batterie mit einer oder mehreren Zellen 1, wie sie beispielsweise in Verbindung mit Fig. 1 dargestellt sind. In Fig. 3 ist der Dichtungsrahmen 10 perspektivisch dargestellt.

Der Dichtungsrahmen 10 umfasst einen Grundkörper 11, der eine durchgehende Öffnung 12 umgreift. Der Grundkörper 11 und die Öffnung 12 sind entsprechend der zu montierenden bzw. der zu haltenden Zelle 1 dimensioniert, nämlich so, dass das Zellgehäuse 2 der Zelle 1 in die Öffnung 12 hineinragt und der Grundkörper 11 an der Siegelnaht 3 anliegt

Der Grundkörper 11 kann im Wesentlichen rechteckig ausgestaltet sein und vier Schenkel 13, 14, 15, 16 aufweisen, die also rechtwinklig zueinander angeordnet sind. Das Material des Grundkörpers 11 kann im Wesentlichen beliebig gewählt sein, wie z.B. Kunststoff oder Metall. Kunststoff als Material für den Grundkörper 11 bietet sich aus Gründen des geringen Gewichts und der einfachen Herstellbarkeit an. Vorteilhaft ist die Verwendung eines thermisch leitfähigen Kunststoffes, durch den der Wärmetransport zwischen ZellOberfläche und Kühl- / Heizkanal verbessert werden kann. Denkbar sind auch Leichtbau-Werkstoffe wie Verbundmaterialien oder geschlossenporige Schäume, die zur Gewichtseinsparung des Gesamtsystems beitragen können.

Vorteilhaft ist weiterhin die Verwendung von Materialien, die selbst-löschend sind und sich demnach bei Kontakt mit den, austretenden, möglicherweise heißen Gasen, nicht entzünden. Hierbei sind beispielsweise Polyamide mit einem hohen Glasfaser-Anteil denkbar.

Der Grundkörper 11 weist eine umlaufende Dichtung 17 auf, die als Dichtfläche oder Dichtstreifen ausgebildet sein kann. Die Dichtung 17 dient als Anpressbereich, um auf die Siegelnaht 3 der Zelle 1 eine Kraft auszuüben. Die Dichtung 17 ist vorzugsweise jedoch nicht notwendigerweise fluchtend mit dem Rand der Öffnung 12 ausgebildet, um bei einer aufgrund einer Änderung der Ladung der Zelle 1 auftretenden Geometrieänderung ein Berühren des Zellgehäuses 2 mit einer innenliegenden Kante des Grundkörpers 11 möglichst zu vermeiden. Dadurch kann eine Reibung zwischen dem Grundkörper 11 und dem Zellgehäuse 2 verhindert werden, was zu einem erhöhten Verschleiß und unter Umständen zum Auftreten einer Undichtigkeit im Bereich der das Zellgehäuse 2 bildenden Metallbleche führen kann.

Zum Aufbau einer Batterie werden mehrere der oben beschriebenen Dichtungsrahmen 10 aufeinander gestapelt, wobei zwischen jeweils zwei Dichtungsrahmen eine Zelle 1 eingesetzt ist, so dass das Zellgehäuse 2 in die jeweilige Öffnung 12 der beiden Dichtungsrahmen 10 hineinreicht und die Siegelnaht 3 durch die an den Schenkeln 13, 14, 15, 16 des Grundkörpers 11 aufgebrachte Dichtung 17 gehalten wird. Die Anordnung der Zelle 1 an dem Dichtungsrahmen 10 ist schematisch in Fig.:4 dargestellt.

Mit Hilfe von Durchgangslöchern 18 können die Dichtungsrahmen 10 aufeinander z.B. mit Hilfe von Schrauben und/oder Bolzen fixiert werden und ein Anpressdruck auf die zwischen jeweils zwei Dichtungsrahmen 10 befindliche Siegelnaht 3 ausgeübt werden. Dadurch wird zum einen eine betreffende Zelle 1 an der Siegelnaht 3 zuverlässig gehalten und gleichzeitig wird auf die Siegelnaht 3 an dem mit der Dichtung 17 beaufschlagten Bereich eine zusätzliche Kraft ausgeübt, so dass dort eine erhöhte Dichtigkeit bei Auftreten eines erhöhten Druckes im Inneren des Zellgehäuses 2, zum Beispiel bei einem Störfall, erreicht wird. Die Durchgangslöcher 18 sind vorzugsweise gleichmäßig in dem Grundkörper 11 verteilt, angeordnet, um einen gleichmäßigen Anpressdruck und insbesondere größtenteils einen vorgegebenen Mindestanpressdruck zu gewährleisten. Alternativ ist denkbar, die Dichtungsrahmen in der Stapelanordnung mit Hilfe von Klammem zu fixieren.

Einer der Schenkel 13 des Grundkörpers 11 ist mit einer verringerten Breite (in Richtung der Erstreckung der dazu rechtwinkligen Schenkel 14, 16) ausgebildet, und stellt vorzugsweise die Seite des Grundkörpers 11 dar, über die die Elektroden 4 der Zelle 1 aus dem mit dem Dichtungsrahmen 10 aufgebauten Batterie herausgeführt werden. Die verringerte Breite des Schenkels 13 ist so gewählt, dass der darauf befindliche Abschnitt der Dichtung 17 noch einen ausreichend hohen Anpressdruck auf die Siegelnaht 3 gewährleistet.

Um Batterien mit mehreren Zellen 1 aufbauen zu können, ist vorzugsweise vorgesehen, den Grundkörper 11 des Dichtungsrahmens 10 beidseitig mit den Dichtungen 17 zu versehen. Die Dichtungen 17 liegen in diesem Fall bezüglich des Grundkörpers 11 einander gegenüber und schließen beide vorzugsweise bündig an den Rand der Öffnung 12 an.

Denkbar ist selbstverständlich auch eine nur einseitige Dichtung, wodurch nur auf einer Seite der Siegelnaht eine elastische Anbindung erfolgt, Eine solche Ausführung hätte den Vorteil der kostengünstigeren Herstellung des Dichtungsrahmens sowie eine ggf. bessere thermische Anbindung der Zelle, wenn die thermische Leitfähigkeit des Materials des Dichtungsrahmens größer ist als die der Dichtung. Der Aufbau einer Batterie erfolgt dann durch Stapeln der Dichtungsrahmen, so dass die Seite eines Dichtungsrahmens, die mit einer Dichtung versehen ist, auf die Seite des Dichtungsrahmens ohne Dichtung aufgesetzt wird.

Der Grundkörper 11 ist weiterhin so dimensioniert, dass dieser über die Siegelnähte 3 der Zelle 1 hinausragen. Dadurch kann zusätzlich zu dem Anpressdruck auf die Siegelnaht 3 eine Versiegelung gegen Feuchtigkeit aus der Atmosphäre vorgesehen werden, wenn zwei benachbarte Dichtungsrahmen 10 in dem über die Siegelnaht 3 herausragenden Bereich unmittelbar aneinander anliegen. Denkbar ist auch, dass die Dichtungsrahmen 10 miteinander formschlüssig verkrallt sind.

Die Dicke des Grundkörpers 11 wird im Wesentlichen von der Dicke des Zellgehäuses 2 im aufgeladenen Zustand bestimmt, das heißt in einem Zustand maximaler Ausdehnung des Zellgehäuses, so dass bei einer Batterie mit mehreren aneinander angeordneten Zellen 1 die Zellen keinen Druck aufeinander ausüben, was zu einer unerwünschten Quer- und Zugbelastung der Siegelnähte 3 führen könnte. Die Dicke des Grundkörpers 11 ist demnach mindestens genau so groß wie die der aufgeladenen Zelle.

Weiterhin sind in dem Grundkörper 11 durnhgänglge Bohrungen 19 vorgesehen, die im zusammengesetzten Zustand der Batterie mit mehreren aufeinander aufgesetzten Dichtungsrahmen 10 Kanäle zum Leiten einer Kühl- oder Heizflüssigkeit ausbilden. Dadurch ist es möglich, eine Temperaturregulierung der mit den oben beschriebenen Dichtungsrahmen 10 aufgebauten Batterie zu erreichen. Die Bohrungen 19 weisen dazu eine axiale Länge auf, die der Dicke des Dichtungsrahmens 10 entspricht Alternativ können in den Bohrungen 19 Rohrleitungen vorgesehen werden, durch die die Kühl- oder Heizflüssigkeit strömen.

Der Grundkörper 11 des Dichtungsrahmens 10 ist vorzugsweise aus einem festen Material ausgebildet, wie zum Beispiel einem Metall oder Kunststoff. Das Material sollte eine ausreichende Festigkeit aufweisen, um auch in den Bereichen zwischen den Durchgangslöchern 18, mit denen die Dichtungsrahmen 10 aneinander fixiert werden, über die Dichtung 17 einen ausreichend Anpressdruck auf die Siegelnaht 3 zu gewährleisten.

In einer alternativen Ausbildung des Dichtungsrahmens sind der Grundkörper und die Dichtung einstückig ausgebildet, wobei der Dichtungsrahmen aus einem elastisch komprimierbaren Material gefertigt ist.

Der Grundkörper 11 kann aus Vollmaterial ausgebildet sein oder es können die Innenkante der Öffnung 12 und die Außenkante des Grundkörpers 11 mit der entsprechenden Dicke des Grundkörpers 11 versehen sein, wobei die Innenkante der Öffnung 12 und die Außenkante des Grundkörpers 11 über Stege miteinander verbunden sind zwischen denen Aussparungen vorgesehen sind, um das Gewicht des so gebildeten Dichtungsrahmens 10 möglichst zu minimieren. Die Durchgangslöcher 18 sowie die Bohrungen 19 können ebenfalls über Stege mit der Innenkante der Öffnung 12 und/oder der Außenkante des Grundkörpers 11 verbunden sein, um deren Position in dem Dichtungsrahmen exakt festzulegen.

Benachbart zur Öffnung 12, die die Zellengehäuse 2 aufnehmen, ist eine Ableitungsöffnung 20 an einem der Schenkel 13, 14, 15, 16 vorgesehen, vorzugsweise an dem dem Schenkel 13 mit der verringerten Breite gegenüberliegenden Schenkel 15. Hierbei muss der Zellaufbau berücksichtigt werden, so dass ein Austreten des Elektrolyten nicht z. B. durch die zellinnere Anordnung von Elektroden und Separatoren behindert wird. Die Ableitungsöffnung 20 stellt eine Durchgangsöffnung durch den Grundkörper 11 dar, so dass bei Aufeinandersetzen von mehreren Dichtungsrahmen 10 die Ableitungsöffnungen 20 einen Ableitungskanal ausbilden.

Die Ableitungsöffnung 20 steht im montierten Zustand mit einem Auslösebereich 21 der Siegelnaht 3 der Zelle 1 in Verbindung, in dem kein oder ein deutlich verminderter Anpressdruck durch die Dichtung 17 auf die Siegelnaht 3 ausgeübt wird. Der Auslösebereich 21 stellt einen Sollausblasbereich für die Zelle 1 dar, so dass bei Auftreten eines Störfalls, der zu einer Druckerhöhung im Inneren des Zellgehäuses 2 führt, die Siegelnaht 3 aufreißt und den im Inneren des Zellgehäuses 2 befindlichen Elektrolyten in den Bereich der Ableitungsöffnung 20 entlässt.

Um eine ausreichende Abdichtung des durch die Ableitungsöffnungen 20 der aufeinander aufgesetzten Dichtungsrahmen 10 gebildeten Ableitkanal zu gewährleisten, kann vorgesehen sein, die Dichtung 17 umlaufend sowohl um die Öffnung 12 als auch um die Ableitöffnung 20 herumzuführen, Dadurch ist es möglich, die Dichtung 17 einstückig und in sich geschlossen auszuführen, wodurch man eine erhöhte Zuverlässigkeit bei der Abdichtung des durch die Öffnung 12 und der Ableitöffnung 20 gebildeten Innenraums der Batterie erreichen kann.

An den Auslösebereich 21 angrenzend kann die Ableitungsöffnung 20 in Form einer Ausbuchtung des Randes der Öffnung 12 hin zum Außenrand des Grundkörpers 11 vorgesehen sein. In diesem Fall geht die Öffnung 12 quasi in die Ableitungsöffnung 20 über. Innerhalb der Ausbuchtung, die die an den Auslösebereich 21 angrenzende Ableitungsöffnung 20 bildet, kann ein Steg 22 angeordnet sein, der eine gegenüber der Dicke des Grundkörpers 11 verminderte Dicke aufweist. Der Steg 22 kann vorzugsweise etwa mittig bezüglich der Dicke des Grundkörpers 11 angeordnet sein. Der Steg 22 dient vorrangig zur mechanischen Stabilisierung des Grundkörpers 11 und kann dazu eine erste Kante 23 aufweisen, die im Wesentlichen eine Verlängerung der Innenkante der Öffnung 12 an dem weiteren Schenkel 15 darstellt. Eine der ersten Kante des Stegs 22 gegenüberliegende zweite Kante 24 bildet im Wesentlichen eine Begrenzung des durch die Ableitungsöffnungen 20 gebildeten Ableitungskanals.

Ein Bereich einer Innenwand oder die gesamte Innenwand der Ableitungsöffnung 20 kann mit einer thermisch resistenten Schutzschicht versehen sein, um eine Beschädigung oder Beeinträchtigung des Grundkörpers 11 durch ausströmenden Elektrolyten, der bei einem Störfall eine hohe Temperatur aufweisen kann, zu vermeiden. Vorzugsweise ist der der Öffnung 11 gegenüberliegende Bereich der Innenwand der Ableitungsöffnung 20 mit der Schutzschicht versehen. So kann der austretende Elektrolyt auf die Schutzschicht aufprallen und die thermische Einwirkung auf den Grundkörper ist reduziert.

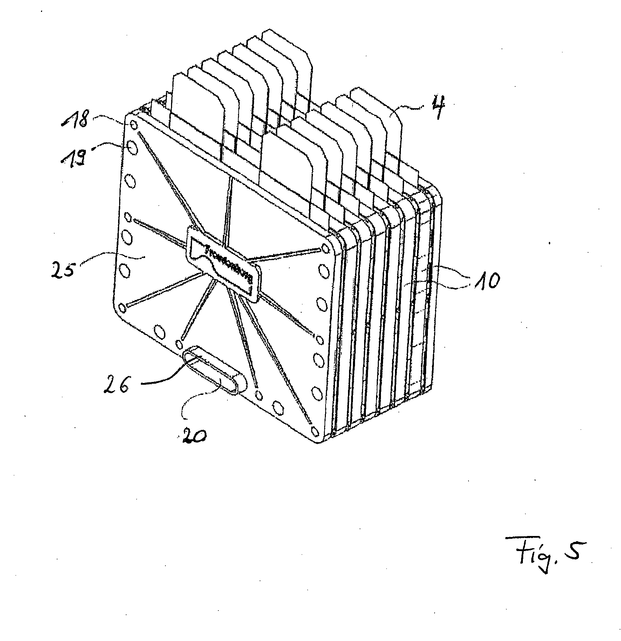

In Fig. 5 ist eine perspektivische Darstellung einer aus mehreren Dichtungsrahmen 10 und Zellen 1 aufgebauten Batterie gezeigt. Man erkennt die Sandwich-Struktur, bei der zwischen zwei benachbarten Dichtungsrahmen 10 jeweils eine Zelle 1 angeordnet ist. Weiterhin sind die Dichtungsrahmen 10 so aufeinander aufgesetzt, dass die Abieitungsöffnungen 20 einen Ableitungskanal bilden, der an den Auslösebereich 21 angrenzend ist. Um die Stirnseiten der so aufgebauten Batterie zu schützen, sind Deckelteile 25 vorgesehen, die mit den Dichtungsrahmen 10 gestapelt werden und die Zugänge für die Bohrungen 19 zum Durchleiten des Kühl- bzw. Heizmittels sowie einen Befestigungsstutzen 26 zum Anschluss einer (nicht gezeigten) Abführungsleitung an den Ableitungskanal, um etwaig austretenden Elektrolyten an eine gewünschte Stelle zu leiten.

Zwischen den einzelnen Zellen können komprimierbare thermisch leitende Komponenten, wie z. B. poröse Vliesstoffe oder Schaummaterialien enthaltend thermisch leitende Komponenten, beschichtete Vliesstoffe / Schäume, Vliesstoffe oder Schäume, die mit Metallfolien belegt I verbunden sind und dergleichen angeordnet sein. Alternativ ist auch denkbar, zwischen den Zellen eine Folien- Heizfolie anzubringen, die z.B. auf die Oberfläche der Zellen verklebt ist oder aber durch ein komprimierbares Element auf die Oberfläche gepresst wird.

Weiterhin ist es denkbar, auf den Befestigungsstutzen 26 bzw. in die Abführungslertung ein Ventil anzubringen, welche im normalen Betriebszustand eine Abdichtung der Batterie nach außen sicher stellt, bei einem hohen Innen-Überdruck durch austretendes Elektrolyt öffnet.

### Bezugszeichenliste

- 1: Zelle
- 2: Zellgehäuse
- 3: Siegelnaht
- 4: Ableitbleche
- 10: Dichtungsrahmen
- 11: Grundkörper
- 12: Öffnung
- 13, 14, 15, 16: Schenkel
- 17: Dichtung
- 18: Durchgangslöcher
- 19: Bohrungen
- 20: Ableitöffnung
- 21: Auslösebereich
- 22: Steg
- 23: erste Kante
- 24: zweite Kante
- 25: Deckelteil
- 26: Stutzen

## Patentansprüche

1. Anordnung umfassed:
- einen Dichtungsrahmen (10) zur Verwendung in einer Batterie mit einem Grundkörper (11), der eine Öffnung (12) umgreift, wobei ein Auslösebereich (21) an einem Rand der Öffnung (12) vorgesehen ist, wobei angrenzend an den Auslösebereich (21) eine durchgängige Ableitungsöffnung (20) in dem Grundkörper (12) ausgebildet ist; und
- eine Zelle (1), wobei die Zelle (1) ein Zellgehäuse (2) aufweist, das von einer Siegelnaht (3) umgeben ist, wobei die Zelle (1) so an den Dichtungsrahmen (10) angelegt ist, dass das Zellgehäuse (2) in die Öffnung (12) hineinreicht, dass die Siegelnaht (3) an der Dichtung (17) anliegt und dass in dem Auslösebereich (21) die Siegelnaht (3) nicht von der Dichtung (17) beaufschlagt ist,
wobei mindestens eine umlaufende elastisch komprimierbare Dichtung (17) vorgesehen ist, die die Öffnung (12) umgreift,
**dadurch gekennzeichnet, dass** die Dichtung (17) weiterhin die Ableitungsöffnung (20) umschließt.

2. Anordung nach Anspruch 1, wobei die Dichtung (17) als Dichtungsstreifen oder Dichtungsbereich vorgesehen ist, der zumindest außerhalb des Auslösebereichs (21) bündig mit einer Kante der Öffnung (12) abschließt.

3. Anordung nach einem der Ansprüche 1 bis 2, wobei in den Grundkörper (11) Bohrungen vorgesehen sind, um einen Kühlmittel- oder Heizmittelkanal auszubilden.

4. Anordung nach einem der Ansprüche 1 bis 3, wobei der Grundkörper (11) aus einem elastisch komprimierbaren Material gefertigt ist.

5. Anordung nach einem der Ansprüche 1 bis 4, wobei die Dichtung (17) als elastisch komprimierbare Schicht ausgebildet ist, die auf dem nichtelastischen Grundkörper (11) aufgebracht ist.

6. Anordung nach einem der Ansprüche 1 bis 5, wobei der Auslösebereich (21) des Grundkörpers (11) durch eine Vertiefung einer Kante der Öffnung (12) in dem Grundkörper (11) ausgebildet ist.

7. Anordung nach einem der Ansprüche 1 bis 6, wobei die Kante des Grundkörpers in dem Auslösebereich (21) durch einen Steg (22) ausgebildet ist, der angeordnet ist, um eine beidseitige Vertiefung einer Kante der Öffnung (12) in dem Grundkörper (11) auszubilden.

8. Anordung nach Anspruch 7, wobei der Steg (22) zwischen der Ableitungsöffnung (20) und der Öffnung (12) angeordnet ist.

9. Batterie, umfassend:
- mindestens zwei Dichtungsrahmen (10) mit jeweils einem Grundkörper (11), der eine Öffnung (12) umgreift, und jeweils mit mindestens einer umlaufenden elastisch komprimierbaren Dichtung (17), wobei jeweils ein Auslösebereich (21) an einem Rand der Öffnung (12) vorgesehen ist, wobei angrenzend an den Auslösebereich (21) eine durchgängige Ableitungsöffnung (20) in dem Grundkörper (12) ausgebildet ist; und
- mindestens eine Zelle (1), wobei die Zelle (1) zwischen zwei Dichtungsrahmen (10) positioniert ist, wobei die Zelle (1) ein Zellgehäuse (2) aufweist, das von einer Siegelnaht (3) umgeben ist, wobei das Zellgehäuse (2) sich in die Öffnungen (12) der Grundkörper (11) der Dichtungsrahmen (10) erstreckt und wobei die Siegelnaht (3) zwischen einer Dichtung (17) eines der Dichtungsrahmen (10) und einem Grundkörper (11) eines weiteren der Dichtungsrahmen (10) oder zwischen zwei sich gegenüberliegenden Dichtungen (17) der Dichtungsrahmen (10) mit einem Anpressduck aufgenommen ist, wobei in dem Auslösebereich die Siegelnaht (3) nicht durch die Dichtung (17) beaufschlagt ist,
**dadurch gekennzeichnet, dass** die Dichtung (17) weiterhin die Ableitungsöffnung (20) umschließt.

10. Batterie nach Anspruch 9, wobei zwischen den Dichtungsrahmen (10) Ableitbleche der Zelle aufgenommen sind, welche über die Dichtungsrahmen (10) hinausragen.

11. Batterie nach einem der Ansprüche 9 und 10, wobei die Batterie durch wechselweises Stapeln von Dichtungsrahmen (10) und Zellen (1) aufgebaut ist, wobei an mindestens einem Ende der Batterie in Stapelrichtung ein Deckelteil (25) angeordnet ist, um den durch die Öffnungen (12) der Dichtungsrahmen (10) gebildeten Innenraum zu verschließen, wobei das Deckelteil (25) ein Anschlusselement aufweist, dass mit einem durch die Ableitungsöffnungen gebildeten Ableitungskanal in Verbindung steht.

## Claims

1. Arrangement comprising:
- a sealing frame (10) for use in a battery with a basic body (11) which engages around an opening (12), a disengaging region (21) being provided at one edge of the opening (12), a continuous discharging opening (20) being formed in the basic body (11) adjacent to the disengaging region (21); and
- a cell (1), the cell (1) having a cell housing (2) which is surrounded by a sealing seam (3), the cell (1) being placed onto the sealing frame (10) in such a way that the cell housing (2) reaches into the opening (12), that the sealing seam (3) bears against the seal (17), and that the sealing seam (3) is not loaded by the seal (17) in the disengaging region (21),
at least one circumferential elastically compressible seal (17) being provided which reaches around the opening (12),
**characterized in that** the seal (17) furthermore encloses the discharging opening (20).

2. Arrangement according to Claim 1, the seal (17) being provided as a sealing strip or sealing region which terminates flushly with an edge of the opening (12) at least outside the disengaging region (21).

3. Arrangement according to either of Claims 1 and 2, holes being provided in the basic body (11), in order to form a cooling-medium or heating-medium channel.

4. Arrangement according to one of Claims 1 to 3, the basic body (11) being produced from an elastically compressible material.

5. Arrangement according to one of Claims 1 to 4, the seal (17) being configured as an elastically compressible layer which is applied on the non-elastic basic body (11).

6. Arrangement according to one of Claims 1 to 5, the disengaging region (21) of the basic body (11) being formed by a depression of one edge of the opening (12) in the basic body (11).

7. Arrangement according to one of Claims 1 to 6, the edge of the basic body being formed in the disengaging region (21) by a web (22) which is arranged in order to form a double-sided depression of one edge of the opening (12) in the basic body (11).

8. Arrangement according to Claim 7, the web (22) being arranged between the discharging opening (20) and the opening (12).

9. Battery, comprising:
at least two sealing frames (10) with in each case one basic body (11) which engages around an opening (12), and in each case with at least one circumferential elastically compressible seal (17), in each case one disengaging region (21) being provided at one edge of the opening (12), a continuous discharging opening (20) being formed in the basic body (11) adjacent to the disengaging region (21); and
- at least one cell (1), the cell (1) being positioned between two sealing frames (10), the cell (1) having a cell housing (2) which is surrounded by a sealing seam (3), the cell housing (2) extending into the openings (12) of the basic bodies (11) of the sealing frames (10), and the sealing seam (3) being received with a contact pressure between a seal (17) of one of the sealing frames (10) and a basic body (11) of a further one of the sealing frames (10) or between two seals (17), which lie opposite one another, of the sealing frames (10), the sealing seam (3) not being loaded by the seal (17) in the disengaging region, **characterized in that** the seal (17) furthermore encloses the discharging opening (20).

10. Battery according to Claim 9, discharging plates of the cell which project beyond the sealing frames (10) being received between the sealing frames (10).

11. Battery according to either of Claims 9 and 10, the battery being constructed by alternate stacking of sealing frames (10) and cells (1), a cover part (25) being arranged at at least one end of the battery in the stack direction in order to close the interior which is formed by the openings (12) of the sealing frames (10), the cover part (25) having a connecting element which is connected to a discharging channel which is formed by the discharging openings.

## Revendications

1. Agencement comprenant :
- un cadre d'étanchéité (10) pour l'utilisation dans une batterie avec un corps de base (11) qui vient en prise autour d'une ouverture (12), une région de déclenchement (21) étant prévue au niveau d'un bord de l'ouverture (12), une ouverture de dérivation traversante (20) étant réalisée dans le corps de base (11) en position adjacente à la région de déclenchement (21) ; et
- une cellule (1), la cellule (1) présentant un boîtier de cellule (2) qui est entouré par un cordon de scellage (3), la cellule (1) étant appliquée contre le cadre d'étanchéité (10) de telle sorte que le boîtier de cellule (2) pénètre dans l'ouverture (12), que le cordon de scellage (3) s'applique contre le joint d'étanchéité (17) et que le cordon de scellage (3) ne soit pas sollicité par le joint d'étanchéité (17) dans la région de déclenchement (21),
au moins un joint d'étanchéité (17) périphérique et élastiquement compressible étant prévu, lequel vient en prise autour de l'ouverture (12),
**caractérisé en ce que** le joint d'étanchéité (17) entoure en outre l'ouverture de dérivation (20).

2. Agencement selon la revendication 1, dans lequel le joint d'étanchéité (17) est prévu sous forme de bande d'étanchéité ou de région d'étanchéité, laquelle se termine au moins à l'extérieur de la région de déclenchement (21) en affleurement avec une arête de l'ouverture (12).

3. Agencement selon l'une quelconque des revendications 1 et 2, dans lequel des alésages sont prévus dans le corps de base (11), afin de réaliser un canal de réfrigérant ou un canal de fluide caloporteur.

4. Agencement selon l'une quelconque des revendications 1 à 3, dans lequel le corps de base (11) est fabriqué en un matériau élastiquement compressible.

5. Agencement selon l'une quelconque des revendications 1 à 4, dans lequel le joint d'étanchéité (17) est réalisé sous forme de couche élastiquement compressible qui est appliquée sur le corps de base (11) non élastique.

6. Agencement selon l'une quelconque des revendications 1 à 5, dans lequel la région de déclenchement (21) du corps de base (11) est réalisée par un renfoncement d'une arête de l'ouverture (12) dans le corps de base (11).

7. Agencement selon l'une quelconque des revendications 1 à 6, dans lequel l'arête du corps de base dans la région de déclenchement (21) est réalisée par une nervure (22) qui est disposée de manière à réaliser un renfoncement bilatéral d'une arête de l'ouverture (12) dans le corps de base (11).

8. Agencement selon la revendication 7, dans lequel la nervure (22) est disposée entre l'ouverture de dérivation (20) et l'ouverture (12).

9. Batterie, comprenant :
- au moins deux cadres d'étanchéité (10) ayant chacun un corps de base (11) qui vient en prise autour d'une ouverture (12) et à chaque fois au moins un joint d'étanchéité (17) périphérique et élastiquement compressible, à chaque fois une région de déclenchement (21) étant prévue au niveau d'un bord de l'ouverture (12), une ouverture de dérivation (20) traversante étant réalisée dans le corps de base (11) en position adjacente à la région de déclenchement (21) ; et
- au moins une cellule (1), la cellule (1) étant positionnée entre deux cadres d'étanchéité (10), la cellule (1) présentant un boîtier de cellule (2) qui est entouré par un cordon de scellage (3), le boîtier de cellule (2) s'étendant dans les ouvertures (12) des corps de base (11) des cadres d'étanchéité (10) et le cordon de scellage (3) étant reçu avec une pression d'application entre un joint d'étanchéité (17) de l'un des cadres d'étanchéité (10) et un corps de base (11) d'un autre des cadres d'étanchéité (10) ou entre deux joints d'étanchéité (17) opposés des cadres d'étanchéité (10), le cordon de scellage (3) n'étant pas sollicité par le joint d'étanchéité (17) dans la région de déclenchement,
**caractérisée en ce que** le joint d'étanchéité (17) entoure en outre l'ouverture de dérivation (20).

10. Batterie selon la revendication 9, dans laquelle des tôles de dérivation de la cellule sont reçues entre les cadres d'étanchéité (10), lesquelles tôles font saillie au-delà des cadres d'étanchéité (10).

11. Batterie selon l'une quelconque des revendications 9 et 10, dans laquelle la batterie est construite par empilement alternatif de cadres d'étanchéité (10) et de cellules (1), une partie de couvercle (25) étant disposée au niveau d'au moins une extrémité de la batterie dans la direction de l'empilement afin de fermer l'espace interne formé par les ouvertures (12) des cadres d'étanchéité (10), la partie de couvercle (25) présentant un canal de dérivation formé par les ouvertures de dérivation.
